(19) Europäisches Patentamt
European Patent Office
Office européen des brevets

(11) EP 0 320 836 B1

(12) **EUROPÄISCHE PATENTSCHRIFT**

(45) Veröffentlichungstag und Bekanntmachung des Hinweises auf die Patenterteilung:
**18.09.1996 Patentblatt 1996/38**

(51) Int Cl.6: **C08K 5/51**, C08L 69/00
// (C08L69/00, 51:04, 25:08, 27:18)

(21) Anmeldenummer: **88120695.7**

(22) Anmeldetag: **10.12.1988**

(54) **Halogenfreie flammfeste Formmassen, Verfahren zur Herstellung und ihre Verwendung**

Halogen-free flame-resistant moulding compositions, process for their preparation une their use

Matières à mouler exemptes d'halogènes et résistant au feu, procédé pour leur préparation et leur utilisation

(84) Benannte Vertragsstaaten:
**BE DE FR GB NL**

(30) Priorität: **17.12.1987 DE 3742768**

(43) Veröffentlichungstag der Anmeldung:
**21.06.1989 Patentblatt 1989/25**

(73) Patentinhaber: **BASF Aktiengesellschaft**
**67063 Ludwigshafen (DE)**

(72) Erfinder:
- **Muehlbach, Klaus, Dr.**
  **D-6148 Heppenheim (DE)**
- **McKee, Graham Edmund, Dr.**
  **D-6940 Weinheim (DE)**
- **Brandt, Hermann, Dr.**
  **D-6707 Schifferstadt (DE)**
- **Blum, Dieter Wolfgang, Dr.**
  **D-6703 Limburgerhof (DE)**

(56) Entgegenhaltungen:
**EP-A- 0 206 058** **EP-A- 0 207 359**
**EP-A- 0 207 369** **EP-A- 0 244 856**
**EP-A- 0 248 308**

Bemerkungen:
Die Akte enthält technische Angaben, die nach dem Eingang der Anmeldung eingereicht wurden und die nicht in dieser Patentschrift enthalten sind.

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 320 836 B1

## Beschreibung

Die Erfindung betrifft eine flammfeste, halogenfreie thermoplastische Formmasse aus Polycarbonat, einem Pfropfmischpolymerisat, einem Copolymerisat, einer Phosphorverbindung und einem Tetrafluorethylenpolymerisat.

Zum Stand der Technik werden genannt:

(1) GB-PS 1 459 648
(2) DE-OS 35 23 314
(3) DE-OS 35 23 316 und
(4) EP 146 023.

Die meisten bekannten flammfesten Mischungen aus ABS und Polycarbonat enthalten halogenhaltige Flammschutzmittel, was im Falle eines Brandes oder des Schwelens zum Freisetzen von toxischen, halogenierten Verbindungen führt. Umfangreiche Angaben hierzu finden sich in (2).

In (1) sind flammwidrige, nichttropfende Polymere, beispielsweise aus ABS-Polymeren oder aus Polycarbonaten, denen ein Flammschutzadditiv, beispielsweise Triphenylphosphat, ein nicht-brennbares Fasermaterial und Polytetrafluorethylenharz zugemischt worden sind, beschrieben. Das Beispiel 2 der Patentschrift zeigt, daß Polytetrafluorethylenharz ohne Faserzusatz nicht das Tropfen verhindert.

Die in (2) und (3) beschriebenen Formmassen aus PC, Styrol-Acryl-Copolymeren (geringen Mengen Pfropfkautschuk), Phosphorsäureestern und PTFE, enthalten keine Halogenverbindungen mit labilem Halogen. Sie sind deshalb auch im Elektro- und Elektroniksektor einsetzbar, besitzen aber völlig ungenügende Zähigkeiten an gekerbten Prüfkörpern.

In (4) werden halogenfreie, flammfeste Mischungen aus Polycarbonat, Styrolhomo- und -copolymerisaten und Pfropfkautschuken auf Basis von ABS oder ASA beschrieben. Die bekannten Mischungen basieren jedoch zum Teil auf Tetramethylbisphenol A und sind empfindlich gegen thermische Belastung und schwer verarbeitbar.

Die wenigen halogenfreien Mischungen [vgl. (1) bis (4)] besitzen jedoch entweder ungenügende Zähigkeit [vgl. (2) oder (3)] oder sind schwer verarbeitbar [vl. (4)] oder besitzen ungenügende Witterungs- und Vergilbungsbeständigkeit.

Es bestand daher die Aufgabe, die vorstehend geschilderten Nachteile zu beheben.

Die Aufgabe wird gelöst durch eine Formmasse gemäß Patentanspruch 1.

Die Erfindung betrifft eine flammfeste, halogenfreie thermoplastische Formmasse, enthaltend, bezogen auf die Formmasse aus A, B, C, D und E,

A) 40 bis 95 Gew.% eines thermoplastischen halogenfreien aromatischen Polycarbonats, auf Basis der Diphenole der Formel (I)

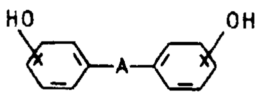

(I)

worin A eine Einfachbindung, eine $C_1$-$C_3$-Alkylen, $C_2$-$C_3$-Alkyliden, ein $C_3$-$C_6$-Cycloalkyliden, -S- oder -$SO_2$- sind,

B) 5 bis 30 Gew.% mindestens eines halogenfreien Pfropfpolymerisats aufgebaut aus, bezogen auf B,

$b_1$) einem Elastomeren (Kautschuk), das 40 bis 80 Gew.% ausmacht, und

$b_2$) einer Pfropfhülle auf dieses Elastomere, die 20 bis 60 Gew.% ausmacht und aufgebaut ist aus, bezogen auf $b_2$),

$b_2a_1$) 50 bis 95 Gew.% Styrol, α-Methylstyrol, kernsubstituiertem Styrol, Methylmethacrylat oder Mischungen daraus und

$b_2a_2$) 50 bis 5 Gew.% (Meth)acrylnitril, Methylmethacrylat, Maleinsäureanhydrid, N-substituiertem Maleinimid oder Mischungen daraus,

C) 5 bis 50 Gew.% mindestens eines halogenfreien thermoplastischen Copolymerisats aus, bezogen auf C,
50 bis 95 Gew.% Styrol, α-Methylstyrol, kernsubstituiertem Styrol, Methylmethacrylat oder Mischungen daraus, und
50 bis 5 Gew.% (Meth)acrylnitril, Methylmethacrylat, Maleinsäureanhydrid, N-substituiertem Maleinimid oder Mischungen daraus,

D) 1 bis 25 Gew.% mindestens einer halogenfreien Phosphorverbindung der Formel

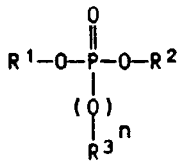

(I)

worin $R^1$, $R^2$ und $R^3$ unabhängig voneinander ein halogenfreies $C_1$-$C_8$-Alkyl oder ein halogenfreies $C_6$-$C_{20}$-Aryl und n = 0 oder 1 sind,

und

E) 0,05 bis 5 Gew.% eines Tetrafluorethylenpolymerisats. Die Formmasse ist dadurch gekennzeichnet, daß das Elastomere $b_1$) hergestellt wird durch Polymerisieren einer Monomermischung aus

$b_1a_1$) 70 bis 99,9 Gew.%, bezogen auf $b_1$), mindestens eines Alkylacrylats mit 1 bis 8 Kohlenstoffatomen im Alkylrest

$b_1a_2$) 0 bis 30 Gew.%, bezogen auf $b_1$), mindestens eines weiteren copolymerisierbaren monoethylenisch ungesättigten Monomeren
und

$b_1a_3$) 0,1 bis 5 Gew.%, bezogen auf $b_1$), eines copolymerisierbaren polyfunktionellen, vernetzenden Monomeren.

Bei der erfindungsgemäßen Formmasse ist die Komponente B auf Basis eines Acrylatkautschuks aufgebaut. Die erfindungsgemäße Formmasse zeigt sowohl gute Zähigkeiten, eine gute Witterungs- und Vergilbungsbeständigkeit, als auch eine ausgezeichnete Flammwidrigkeit. Überraschend war, daß die Verwendung von Pfropfkautschuken auf Basis eines Acrylatkautschuks deutlich bessere Flammwidrigkeiten besitzen als solche auf Basis eines Butadienkautschuks. Mischungen mit Pfropfkautschuken auf Basis von Acrylatpolymeren gelten allgemein als schwierig flammfest auszurüsten, da sie nicht wie die entsprechenden Butadienkautschuke bei höheren Temperaturen vernetzen, und damit zum brennenden Abtropfen neigen.

Als halogenfrei im Sinne der vorliegenden Erfindung gelten solche Hischungen, die keine Substanzen enthalten, die bei Temperaturen bei und unter der Zersetzung der Polymermatrix flüchtige Halogenverbindungen freisetzen. Beispiele hierfür sind die konventionellen Halogenflammschutzmittel. Im Gegensatz dazu wird Polytetrafluorethylen nach dieser Definition als halogenfrei bezeichnet, da es bei der Zersetzungstemperatur der Polymermatrix stabil ist.

Nachstehend werden der Aufbau der Formmasse aus den Komponenten, deren Herstellung und die Herstellung sowie Anwendung der Formmasse beschrieben.

Die Formmasse enthält die Komponenten A bis E, vorzugsweise besteht sie aus diesen. Je nach der Anwendung können noch unterschiedlichste Zusätze enthalten sein.

Die Formmasse enthält folgende Anteile der Komponenten, jeweils bezogen auf A+B+C+D+E:

A: 40 bis 95 Gew.%, vorzugsweise 45 bis 85 Gew.%, mindestens 50 bis 80 Gew.%

B: 5 bis 30 Gew.%, vorzugsweise 5 bis 25 Gew.%, mindestens 5 bis 20 Gew.%

C: 5 bis 50 Gew.%, vorzugsweise 5 bis 40 Gew.%, mindestens 5 bis 30 Gew.%

D: 1 bis 25 Gew.%, vorzugsweise 3 bis 20 Gew.%, mindestens 5 bis 18 Gew.%

E: 0.05 bis 5 Gew.%, vorzugsweise 0,05 bis 2,5 Gew.%, mindestens 0,05 bis 1 Gew.%.
Bezogen auf 100 Gew.-Teile der Formmasse aus A+B+C+D+F, können zugegen sein

F: 0,05 bis 100 Gew.-Teile üblicher Zusatzstoffe.

Komponente A

Erfindungsgemäß geeignete, thermoplastische halogenfreie aromatische Polycarbonate gemäß Komponente A) sind solche auf Basis der Diphenole der Formel (I)

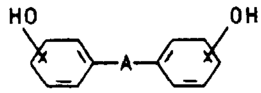

(I)

worin A eine Einfachbindung, eine $C_1$-$C_3$-Alkylen, $C_2$-$C_3$-Alkyliden, ein $C_3$-$C_6$-Cycloakyliden, -S- oder -$SO_2$- sind.

Erfindungsgemäß geeignete Polycarbonate gemäß Komponente A sind sowohl Homopolycarbonate als auch Copolycarbonate.

Die Diphenole der Formel (I) sind entweder literaturbekannt oder nach literaturbekannten Verfahren herstellbar.

Die Herstellung der erfindungsgemäß geeigneten Polycarbonate gemäß Komponente A ist literaturbekannt und kann beispielsweise mit Phosgen nach dem Phasengrenzflächenverfahren oder mit Phosgen nach dem Verfahren in homogener Phase (dem sogenannten Pyridinverfahren) erfolgen, wobei das jeweils einzustellende Molekulargewicht in bekannter Weise durch eine entsprechende Menge an bekannten Kettenabbrechern erzielt wird. (Bezüglich polydiorganosiloxanhaltigen Polycarbonaten siehe beispielsweise DE-OS 33 34 782).

Geeignete Kettenabbrecher sind beispielsweise Phenol, p-tert.-Butylphenol aber auch langkettige Alkylphenole wie 4-(1,3-Tetramethyl-butyl)-phenol, gemäß DE-OS 2 842 005 oder Monoalkylphenole oder Dialkylphenole mit insgesamt 8 bis 20 C-Atomen in den Alkylsubstituenten gemäß deutscher Patentanmeldung P 35 06 472.2 (Le A 23 654), wie beispielsweise p-Nonylphenyl, 3,5-di-tert.-Butylphenol, p-tert.-Octylphenol, p-Dodecylphenol, 2-(3,5-dimethyl-heptyl)-phenol und 4-(3,5-Dimethylheptyl)-phenol.

Die erfindungsgemäß geeigneten Polycarbonate gemäß Komponente A weisen relative Viskositäten $\eta_{rel}$ von 1,10 bis 1,50, insbesondere von 1,25 bis 1,40 ml/g auf. Dies entspricht mittleren Molekulargewichten (Mw von 10 000 bis 200 000, vorzugsweise von 20 000 bis 80 000.

Geeignete Diphenole der Formel (I) sind beispielsweise 4,4'-Dihydroxydiphenyl, 2,2-Bis-(4-hydroxyphenyl)-propan, 2,4-Bis-(4-hydroxyphenyl)-2-methylbutan, 1,1-Bis-(4-hydroxyphenyl)-cyclohexan.

Bevorzugte Diphenole der Formel (I) sind 2,2-Bis-(4-hydroxyphenyl)-propan und 1,1-Bis-(4-hydroxyphenyl)-cyclohexan.

Die erfindungsgemäß geeigneten Polycarbonate gemäß Komponente A können in bekannter Weise verzweigt sein, und zwar vorzugsweise durch den Einbau von 0,05 bis 2,0 Mol.%, bezogen auf die Summe der eingesetzten Diphenole, an drei- oder mehr als dreifunktionellen Verbindungen, beispielsweise solchen mit drei oder mehr als drei phenolischen OH-Gruppen.

Bevorzugte Polycarbonate sind neben dem Bisphenol A-Homopolymerisat die Copolycarbonate von Bisphenol A.

Halogenfreie Polycarbonate im Sinne der vorliegenden Erfindung bedeutet, daß die Polycarbonate aus halogenfreien Diphenolen, halogenfreien Kettenabbrechern und gegebenenfalls halogenfreien Verzweigen aufgebaut sind, wobei der Gehalt an untergeordneten ppm-Mengen an verseifbarem Chlor, resultierend beispielsweise aus der Herstellung der Polycarbonate mit Phosgen nach dem Phasengrenzflächenverfahren, nicht als halogenhaltig im Sinne der Erfindung anzusehen ist. Derartige Polycarbonate mit ppm-Gehalten an verseifbarem Chlor sind halogenfreie Polycarbonate im Sinne vorliegender Erfindung.

Komponente B

Die Pfropfpolymerisate B sind als "ASA-Kautschuke" bekannt. Ihre Herstellung und der Aufbau sind beispielsweise in DE-OS 28 26 925, DE-OS 31 49 358 und DE-OS 34 14 118 beschrieben.

Die Komponente B wird vorzugsweise gebildet aus:

$b_1$) mindestens einem Elastomeren (Kautschuk), das 40 bis 80 Gew.%, vorzugsweise 50 bis 75 Gew.%, bezogen auf B), ausmacht und aus einer Monomermischung aus

$b_1a_1$) 70 bis 99,9 Gew.%, bezogen auf $b_1$), mindestens eines Alkylacrylats mit 1 bis 8 Kohlenstoffatomen im Alkylrest

$b_1a_2$) 0 bis 30 Gew.%, bezogen auf $b_1$), mindestens eines weiteren copolymerisierbaren monoethylenisch ungesättigten Monomeren
und

$b_1a_3$) 0,1 bis 5 Gew.%, bezogen auf $b_1$), eines copolymerisierbaren polyfunktionellen, vernetzenden Mono-

meren

polymerisiert wird und

$b_2$) einer Pfropfhülle auf dieses Elastomere, die 20 bis 60 Gew.%, vorzugsweise 25 bis 50 Gew.%, bezogen auf B), ausmacht und aufgebaut ist aus

$b_2a_1$) 50 bis 95 Gew.% Styrol, α-Methylstyrol, kernsubstituiertem Styrol, Methylmethacrylat oder Mischungen daraus, und

$b_2a_2$) 50 bis 5 Gew.% (Meth)acrylnitril, Methylmethacrylat, Maleinsäureanhydrid, N-substituiertem Maleinimid oder Mischungen darauf.

Als Monomere für die Herstellung des Elastomeren $b_1$) kommen in Betracht:

$b_1a_1$) 70 bis 99,9 Gew.%, vorzugsweise 99 Gew.%, bezogen auf $b_1$) eines Alkylacrylates mit 1 bis 8 C-Atomen im Alkylrest, vorzugsweise werden n-Butylacrylat und/oder 2-Ethyl-hexylacrylat angewendet, insbesondere n-Butylacrylat als alleiniges Alkylacrylat.

$b_1a_2$) Gegebenenfalls kann das elastomere Polymerisat $b_1$) auch noch bis zu 30, insbesondere 20 bis 30 Gew.%, jeweils bezogen auf $b_1$), eines weiteren copolymerisierbaren Monomeren $b_1a_2$, wie Butadien, Isopren, Styrol, Acrylnitril, Methylmethacrylat und/oder Vinylmethylether enthalten.

$b_1a_3$) Um vernetzte Acrylsäureester-Polymerisate zu erhalten, wird die Polymerisation der Acrylsäureester in Gegenwart von 0,1 bis 5 Gew.%, vorzugsweise von 1 bis 4 Gew.%, bezogen auf die bei der Herstellung der Pfropfgrundlage eingesetzten gesamten Monomeren, eines copolymerisierbaren, polyfunktionellen, vorzugsweise bi - oder trifunktionellen, die Vernetzung bewirkenden Monomeren $b_1a_3$) durchgeführt. Als solche bi- oder polyfunktionellen Vernetzungsmonomeren $b_1a_3$) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vernetzungsmonomere sind beispielsweise Divinylbenzol, Diallylmaleat, Diallylfumarat, Diallylphhtalat, Triallylcyanurat oder Triallylisocyanat. Als besonders günstiges Vernetzungsmonomeres hat sich der Acrylsäureester des Tricyclodecenylalkohols erwiesen (vgl. DE-PS 12 60 135).

Die Kautschuke liegen in den Pfropfpolymerisaten B) in Form wenigstens partiell vernetzter Teilchen einer mittleren Teilchengröße von 50 bis 700 nm vor ($d_{50}$-Wert der integrierten Masseverteilung).

Um dies zu erreichen werden die Teilchen des Kautschuks in bekannter Weise, z.B durch Agglomeration, vergrößert, so daß der Latex bimodal (50 bis 180 nm und 200 bis 700 nm) aufgebaut ist.

Die Herstellung des Pfropfmischpolymerisats B kann beispielsweise nach der in der DE-PS 12 60 135 beschriebenen Methode erfolgen.

Der Aufbau der Pfropfhülle des Pfropfmischpolymerisats kann ein- oder zweistufig erfolgen, wobei vorzugsweise das grobteilige Produkt zweistufig (gepfropft) aufgebaut ist.

Im Falle des einstufigen Aufbaues der Pfropfhülle wird ein Gemisch der Monomeren $b_2a_1$) und $b_2a_2$) in dem gewünschten Gew.-Verhältnis im Bereich von 90:10 bis 65:35 in Gegenwart des Elastomeren $b_1$, in an sich bekannter Weise (vgl. z.B. DE-OS 28 26 925), vorzugsweise in Emulsion, polymerisiert.

Im Falle eines zweistufigen Aufbaus der Pfropfhüle $b_2$) macht die 1. Stufe 20 bis 70 Gew.%, vorzugsweise 25 bis 50 Gew.%, bezogen auf $b_2$), aus. Zu ihrer Herstellung werden nur monoethylenisch-ungesättigte aromatische Kohlenwasserstoffe mit bis zu 12 C-Atomen ($b_2a_1$) verwendet.

Die 2. Stufe der Pfropfhülle macht 30 bis 80 Gew.%, insbesondere 50 bis 75 Gew.%, jeweils bezogen auf $b_2$), aus. Zu ihrer Herstellung werden Mischungen aus den genannten monoethylenisch ungesättigte aromatischen Kohlenwasserstoffen $b_2a_1$) und monoethylenisch ungesättigten Monomeren $b_2a_2$) im Gewichtsverhältnis $b_2a_1$)/$b_2a_2$) von 90:10 bs 60:40, insbesondere 80:20 bis 70:30 angewendet.

Als bevorzugte Monomeren-Gemische werden vor allem Styrol und Acrylnitril, α-Methylstyrol und Acrylnitril, Styrol, Acrynitril und Methylmethacrylat, Styrol und Maleinsäureanhydrid eingesetzt.

Die bei der Herstellung des Pfropfmischpolymerisats B) entstehenden, nicht gepfropften Anteile an Copolymerisaten aus den Pfropfmonomeren $b_2a_1$) und/oder $b_2a_2$) werden im Sinne der vorliegenden Erfindung der Komponente B zugerechnet.

Die Bedingungen der Pfropfmischpolymerisation sind so zu wählen, daß Teilchengrößen von 50 bis 700 nm ($d_{50}$-Wert d. integralen Massenverteilung) resultieren. Maßnahmen hierzu sind bekannt und z.B. in der DE-PS 12 60 135

und der DE-OS 28 26 925 beschrieben.

Um möglichst zähe Produkte zu erzielen, ist es häufig von Vorteil, eine Mischung mindestens zweier Pfropfmischpolymerisate mit unterschiedlicher Teilchengröße zu verwenden.

Der chemische Aufbau der beiden Pfropfmischpolymerisate $B_1$ und $B_2$ ist vorzugsweise derselbe, obwohl die Hüle des grobteiligen Pfropfmischpolymerisates insbesondere auch zweistufig aufgebaut werden kann.

In einer bevorzugten Ausführungsform wird eine Mischung aus zwei Pfropfmischpolymerisaten mit Teilchendurchmessern ($d_{50}$-Wert der integralen Massenverteilung) von 50 bis 180 nm bzw. 200 bis 700 nm im Gewichtsverhältnis 70:30 bis 30:70 eingesetzt.

Mischungen aus der Komponente A und B, wobei letztere ein grob- und ein feinteiliges Pfropfmischpolymerisat aufweist, sind z.B. in der DE-OS 36 15 607 beschrieben. Mischungen aus der Komponente A und B, wobei letztere eine zweistufige Pfropfhülle aufweist, sind aus EP 111 260 bekannt.

Komponente C

Bevorzugte halogenfreie Copolymerisate gemäß Komponente C) sind solche aus wenigstens einem Monomeren aus der Reihe Styrol, α-Methylstyrol, Alkylstyrol, Methylmethacrylat mit wenigstens einem Monomeren aus der Reihe Acrylnitril, Methacrylnitril, Methylmethacrylat, Maleinsäureanhydrid.

Copolymerisate gemäß Komponente C) entstehen häufig bei der Pfropfpolymerisation zur Herstellung der Komponente B) als Nebenprodukte, besonders dann, wenn große Mengen Monomere auf kleine Mengen Kautschuk gepfropft werden.

Die Copolymerisate gemäß Komponente C) sind harzartig, thermoplastisch und kautschukfrei. Besonders bevorzugte Copolymerisate C) sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid.

Besonders bevorzugte Gewichtsverhältnisse im thermoplastischen Copolymerisat C) sind 60 bis 80 Gew.% des vinylaromatischen und 40 bis 20 Gew.% des ethylenisch ungesättigten Monomeren. Es können auch mehrere der beschriebenen Copolymeren gleichzeitig eingesetzt werden.

Die Copolymerisate gemäß Komponente C) sind bekannt und lassen sich durch radikalische Polymerisation, insbesondere durch Emulsions-, Suspensions-, Lösungs- oder Massepolymerisation herstellen. Die Copolymerisate gemäß Komponente C) weisen Viskositätszahlen im Bereich von 40 bis 160, vorzugsweise von 60 bis 100 [ml/g] auf, dies entspricht Molekulargewichten $\overline{M}_w$ zwischen 15000 und 200000.

Komponente D

Die erfindungsgemäß geeigneten halogenfreien Phosphorverbindungen gemäß Komponente D) sind generell bekannt (siehe beispielsweise Ullmann, Enzyklopädie der technischen Chemie, Bd. 18, S. 301ff, 1979, Houben-Weyl, Methoden der organischen Chemie, Bd. 12/1, S. 43, S. 136; Beilstein, Bd. 6, S. 177).

Erfindungsgemäß geeignete Phosphorverbindungen gemäß Komponente D), Formel (I) sind beispielsweise Tri-(2,6-dimethylphenyl)-phosphat, Triphenylphosphat, Trikresylphosphat, Diphenyl-2-ethyl-kresylphosphat, Diphenylkresylphosphat, Tri-(isopropylphenyl)-phosphat, Methanphosphonsäure-diphenylester, Phenylphosphonsäurediphenylester, Triphenylphosphinoxid, Trikresylphosphinoxid oder Tri-(2,6-dimethylphenyl)phosphinoxid.

Komponente E

Die erfindungsgemäß geeigneten Tetrafluorethylenpolymerisate gemäß Komponente E) sind Polymere mit Fluorgehalten von 70 bis 76 Gew.%. Beispiele sind Polytetrafluorethylen, Tetrafluorethylen-Hexafluorpropylen-Copolymere oder Tetrafluorethylen-Copolymerisate mit geringen Mengen fluorfreier copolymerisierbarer ethylenisch ungesättigter Monomerer.

Diese Polymerisate sind bekannt. Sie können nach bekannten Verfahren hergestellt werden, so beispielsweise durch Polymerisation von Tetrafluorethylen in wäßrigem Medium mit einem freie Radikale bildenden Katalysator, beispielsweise Natrium-, Kalium- oder Ammoniumperoxidisulfat bei Drücken von 7 bis 70 kg/cm$^2$ und bei Temperaturen von 0 bis 200°C, vorzugsweise bei Temperaturen von 20 bis 100°C (US-Patent 2 534 058). Die aus so hergestellten Suspensionen oder Emulsionen durch Koagulation oder durch Fällung und gegebenenfalls durch anschließendes Mahlen erhaltenen Polytetrafluorethylen-Pulver können Korngrößen im Bereiche von 0,05 bis 200 µm besitzen. Vorzugsweise werden solche mit mittleren Korngrößen von 0,1 bis 20 µm angewendet.

Ein geeignetes Polytetrafluorethylen ist beispielsweise Hostaflon TF 2026® der Fa. Hoechst. Die Tetrafluorethylenpolymerisate können Molekulargewichte zwischen 50.000 und 10.000.000 besitzen ($\overline{M}_n$ Gewichtsmittelmolekulargewichte ermittelt durch Endgruppenbestimmung gemäß R.C. Doban, 130. Meeting der American Chemical, Society,

Atlantic City, September 1956). Die Dichten liegen im Bereich von 1,2 bis 1,9 [g/$cm^3$].

Die Tetrafluorethylenpolymerisate können der Mischung als Pulver oder in vorgebatchter Form zugegeben werden. Bevorzugt wird die vorgebatchte Form. Hierzu können beispielsweise die Emulsionen des Pfropfkautschuks B) und der Tetrafluorpolymerisate E) miteinander gemischt und gemeinsam koaguliert werden. Eine weitere Variante besteht darin, die wäßrige Emulsion des Tetrafluorpolymerisats in einem Extruder in die Schnecke des Copolymerisats C) einzupumpen und das Wasser durch Vakuumentgasung abzutrennen.

Komponente F

Die Formmasse kann weiterhin übliche Zusatzstoffe enthalten. Genannt seien

-- Kohlenstoff-Fasern,

Glasfasern u.a.

Die verwendeten Glasfasern können aus E-, A- oder C-Glas sein. Sie sind vorzugsweise mit einer Schlichte und einem Haftvermittler ausgerüstet. Ihr Durchmesser liegt im allgemeinen zwischen 6 und 20 µm. Es können sowohl Endlosfasern (rovings) als auch Schnittglasfasern mit einer Länge von 1 bis 10 mm, vorzugsweise 3 bis 6 mm, eingesetzt werden.

- Füll- oder Verstärkungsstoffe, wie Glaskugeln, Mineralfasern, Whisker, Aluminiumoxidfasern, Glimmer, Quarzmehl, Wollastonit etc.

- Metallflocken (z.B. Aluminiumflocken der Fa. Transmet Corp.), Metallpulver, Metallfasern, metallbeschichtete Füllstoffe (z.B. nickelbeschichtete Glasfasern) sowie andere Zuschlagsstoffe, die elektromagnetische Wellen abschirmen. Insbesondere können Al-Flocken (K 102 der Fa. Transmet) in Mengen von 30 bis 70 Gew.-Teilen, bezogen auf die flammfeste Formmasse aus 100 Gew.-Teile A bis E für EMI-Zwecke in Betracht; ferner Abmischen dieser Masse mit zusätzlich Kohlenstofffasern oder Leitfähigkeitsruß oder nickelbeschichteten C-Fasern.

Die erfindungsgemäße Formmasse kann ferner weitere Zusatzstoffe enthalten, die für Polycarbonate, SAN-Polymerisate und Pfropfmischpolymerisate auf Basis von ASA etc. oder deren Mischungen typisch und gebräuchlich sind. Als solche Zusatzstoffe seien beispielsweise genannt: Farbstoffe, Pigmente, Antistatika, Antioxidantien und insbesondere die Schmiermittel, die für die Weiterverarbeitung der Formmasse, z.B. bei der Herstellung von Formkörpern bzw. Formteilen erforderlich sind.

Herstellung der Formmasse

Die Herstellung der erfindungsgemäßen Formmasse erfolgt durch Mischen der Komponenten. Es kann vorteilhaft sein, einzelne Komponenten vorzumischen. Auch das Mischen der Komponenten in Lösung und Entfernen der Lösungsmittel ist möglich.

Geeignete organische Lösungsmittel für die Komponenten A) bis E) und die Zusätze der Gruppe F) sind beispielsweise Chlorbenzol, Gemische aus Chlorbenzol und Methylenchlorid oder Gemische aus Chlorbenzol und aromatischen Kohlenwasserstoffen, z.B. Toluol.

Das Eindampfen der Lösungsmittelgemische kann beispielsweise in Eindampfextrudern erfolgen.

Das Mischen der z.B. trockenen Komponenten A, B, C, D, E und gegebenenfalls F kann nach allen bekannten Methoden erfolgen. Vorzugsweise geschieht jedoch das Mischen der Komponenten A, B, C, D, E und gegebenenfalls F bei Temperaturen von 200 bis 320°C durch gemeinsames Extrudieren, Kneten oder Verwalzen der Komponenten, wobei die Komponenten notwendigenfalls zuvor aus der bei der Polymerisation erhaltenen Lösung oder aus der wäßrigen Dispersion isoliert worden sind. Die in wäßriger Dispersion erhaltenen Produkte der Pfropfmischpolymerisation (Komponente B) können zusammen mit der Emulsion der Komponente E koaguliert, gefällt und teilweise entwässert oder direkt als Dispersionen mit der Komponente C und dann mit dem Polycarbonat A und der Komponente D, vermischt werden, wobei dann während des Vermischens die vollständige Trocknung der Komponenten B und E erfolgt. Außerdem kann die Emulsion der Komponente E unter Entgasung in einem Extruder in eine Schmelze der Komponenete C eingezogen werden und im selben Extruder nach der Entgasung die weiteren Komponenten A, B und D zudosiert werden.

Geeignete Mischaggregate für die Durchführung des erfindungsgemäßen Verfahrens sind beispielsweise übliche Taumelmischer oder Rührwerksmischer.

Geeignete Aggregate für die Schmelzcompoundierung sind beispielsweise diskontinuierlich arbeitende, beheizte Innenkneter mit oder ohne Stempel, kontinuierlich arbeitende Innenkneter, Schneckenkneter mit axial oszillierenden

Schnecken. Zweiwellenextruder sowie Mischwalzwerke mit beheizten Walzen.

Geeignete Aggregate für die Schmelzextrusion sind beispielsweise Ein- und Zweiwellenextruder.

Die erfindungsgemäße Formmasse kann nach den bekannten Verfahren der Thermoplastverarbeitung bearbeitet werden, also z.B. durch Extrudieren, Spritzgießen, Kalandrieren, Hohlkörperblasen, Pressen oder Sintern: besonders bevorzugt werden aus den nach dem erfindungsgemäßen Verfahren hergestellte Formmassen Formteile durch Spritzgießen für den Automobilbau, den Bausektor, für Büromaschinen, elektrische Geräte und Haushaltsgeräte hergestellt.

Die in der vorliegenden Anmeldung beschriebenen Parameter werden wie folgt bestimmt:

1. die mittlere Teilchengröße und die Teilchengrößenverteilung wurde aus der integralen Massenverteilung bestimmt. Bei den mittleren Teilchengrößen handelt es sich in allen Fällen um das Gewichtsmittel der Teilchengrößen, wie sie mittels einer analytischen Ultrazentrifuge entsprechend der Methode von W. Scholtan und H. Lange, Kolloid-Z, und Z.-Polymere 250 (1972), Seiten 782 bis 796, bestimmt wurden. Die Ultrazentrifugenmessung liefert die integrale Massenverteilung des Teilchendurchmessers einer Probe. Hieraus läßt sich entnehmen, wieviel Gewichtsprozent der Teilchen einen Durchmesser gleich oder kleiner einer bestimmten Größe haben. Der mittlere Teilchendurchmesser, der auch als $d_{50}$-Wert der integralen Massenverteilung bezeichnet wird, ist dabei als der Teilchendurchmesser definiert, bei dem 50 Gew.% der Teilchen einen kleineren Durchmesser haben als der Durchmesser, der dem dso-Wert entspricht. Ebenso haben dann 50 Gew.% der Teilchen einen größeren Durchmesser als der $d_{50}$-Wert. Zur Charakterisierung der Breite der Teilchengrößenverteilung der Kautschukteilchen werden neben dem dso-Wert (mittlerer Teilchendurchmesser) die sich aus der integralen Massenverteilung ergebenden $d_{10}$- und $d_{90}$-Werte herangezogen. Der $d_{10}$- bzw. $d_{90}$-Wert der integralen Massenverteilung ist dabei entsprechend dem dso-Wert definiert mit dem Unterschied, daß sie auf 10 bzw. 90 Gew.% der Teilchen bezogen sind. Der Quotient

$$\frac{d_{90} - d_{10}}{d_{50}} = Q$$

stellt ein Maß für die Verteilungsbreite der Teilchengröße dar.

2. Die Kerbschlagzähigkeit, $a_K$, in [kJ/m$^2$] wurde nach DIN 53 453 an bei 250°C gespritzten Normkleinstäben bei 23°C gemessen. Die Schlagzähigkeiten von Vergleichsproben und von Proben der erfindungsgemäßen Formmasse sind in der Tabelle zusammengefaßt.

3.

a) Die relative Lösungsviskosität $\eta_{rel.}$, des eingesetzten Polycarbonats wurde in einer 0,5 %igen Lösung in Methylenchlorid bei 23°C gemessen;

b) die Viskositätszahl, VZ, der Copolymerisate C in 0,5 %iger Lösung in Dimethylformamid bei 23°C.

4. Die Flammschutzprüfung erfolgt im vertikalen Brandtest nach den Vorschriften der Underwriter Laboratories zwecks Einordnung in eine der Brandklassen UL 94 V0, V1 oder V2.
Die Einstufung eines flammgeschützten Thermoplasten in die Brandklasse UL 94 V0 erfolgt, wenn folgende Kriterien erfüllt sind: Bei einem Satz von 5 Proben der Abmessungen 127 x 12,7 x 3,16 mm dürfen alle Proben nach zweimaliger Beflammung von 10 sek Zeitdauer mit einer offenen Flamme (Höhe 19 mm) nicht länger als 10 sek nachbrennen. Die Summe der Nachbrennzeiten bei 10 Beflammungen von 5 Proben darf nicht größer sein als 50 sek. Es darf kein brennendes Abtropfen, vollständiges Abbrennen oder ein Nachglühen von länger als 30 sek erfolgen. Die Einstufung in die Brandklasse UL 94 V1 erfordert, daß die Nachbrennzeiten nicht länger als 30 sek sind und daß die Summe der Nachbrennzeiten von 10 Beflammungen von 5 Proben nicht größer als 250 sek ist. Das Nachglühen darf nie länger als 60 sek dauern. Die übrigen Kriterien sind identisch mit den oben erwähnten. Eine Einstufung in die Brandklasse UL 94 V2 erfolgt dann, wenn es bei Erfüllung der übrigen Kriterien zur Einstufung UL 94 V1 zu brennendem Abtropfen kommt.

4. Die Durchstoßarbeit, $W_{ges}$, im Plastechontest (Nm), wurde nach DIN 53 453 an bei 250°C spritzgegossenen 2 mm dicken Rundscheiben bestimmt. Die Prüfung erfolgte bei Raumtemperatur (23°C).

5. Die Vergilbungsbeständigkeit wurde visuell, vergleichend bestimmt. Hierzu wurden 60 mm Rundscheiben in einem Xenontestgerät bei Raumtemperatur 60 Stunden belichtet und die Farbe der Prüfkörper mit solchen verglichen, die im Dunkeln gelagert waren.

Für die Herstellung erfindungsgemäßer Formmassen und Massen für Vergleichsversuche wurden die nachfolgend beschriebenen Produkte verwendet.

Komponente A

Als Komponente A wurde ein handelsübliches Polycarbonat auf Basis von Bisphenol A mit einer relativen Lösungsviskosität von 1,30 ml/g eingesetzt.

Komponente B

Als Komponente B wurden die im folgenden beschriebenen Pfropfmischpolymerisate eingesetzt.

(a) Herstellung des feinteiligen Pfropfmischpolymerisats $B_1$.

($a_1$) 16 Teile Butylacrylat und 0,4 Teile Tricyclodecenylacrylat werden in 150 Teilen Wasser unter Zusatz von einem Teil des Natriumsalzes einer $C_{12}$-$C_{18}$-Paraffinsulfonsäure, 0,3 Teilen Kaliumpersulfat, 0,3 Teilen Natriumhydrogencarbonat und 0,15 Teilen Natriumpyrophosphat unter Rühren auf 60°C erwärmt. 10 Minuten nach dem Anspringen der Polymerisationsreaktion wurden innerhalb von 3 Stunden eine Mischung aus 82 Teilen Butylacrylt und 1,6 Teilen Tricyclodecenylacrylat zugegeben. Nach Beendigung der Monomerzugabe wurde noch eine Stunde nachreagieren gelassen. Der erhaltene Latex des vernetzten Butylacrylat-Polymerisats hatte einen Feststoffgehalt von 40 Gew.%. Die mittlere Teilchengröße (Gewichtsmittel) wurde zu 76 nm ermittelt. Die Teilchengrößenverteilung war eng (Quotient Q = 0,29).

($a_2$) 150 Teile des nach ($a_1$) erhaltenen Polybutylacrylat-Latex wurden mit 40 Teilen einer Mischung aus Styrol und Acrylnitril (Gewichtsverhältnis 75:25) und 60 Teilen Wasser gemischt und unter Rühren nach Zusatz von weiteren 0,03 Teilen Kaliumpersulfat und 0,05 Teilen Lauroylproxid 4 Stunden auf 65°C erhitzt. Nach Beendigung der Pfropfmischpolymerisation wurde das Polymerisationsprodukt mittels Calciumchloridlösung bei 95°C aus der Dispersion gefält, mit Wasser gewaschen und im warmen Luftstrom getrocknet. Der Pfropfgrad des Pfropfmischpolymerisats betrug 35 %, die Teilchengröße 91 nm.

(b) Herstellung eines grobteiligen Pfropfmischpolymerisats $B_2$

($b_1$) Zu einer Vorlage aus 1,5 Teilen des in der Stufe ($a_1$) hergestellten Latex wurden nach Zugabe von 50 Teilen Wasser und 0,1 Teilen Kaliumpersulfat im Verlauf von 3 Stunden einerseits eine Mischung aus 49 Teilen Butylacrylat und 1 Teil Tricyclodecenylacrylat und andererseits eine Lösung von 0,5 Teilen des Natriumsalzes einer $C_1$2-$C_{18}$-Paraffinsulfonsäure in 25 Teilen Wasser bei 60°C zulaufen gelassen. Nach Zulaufende wurde 2 Stunden nachpolymerisiert. Der erhaltene Latex des vernetzten Butylacrylat-Polymerisats hatte einen Festwtoffgehalt von 40 %. Die mittlere Teilchengröße (Gewichtsmittel des Latex) wurde zu 430 nm ermittelt. Die Teilchengrößenverteilung war eng (Q = 0,1).

($b_2$) 150 Teile dieses Latex wurden mit 20 Teilen Styrol und 60 Teilen Wasser gemischt und unter Rühren nach Zusatz von weiteren 0,03 Teilen Kaliumpersulfat und 0,05 Teilen Lauroylproxid 3 Stunden auf 65°C erhitzt. Die bei dieser Pfropfmischpolymerisation erhaltene Dispersion wurde dann mit 20 Teilen eines Gemisches aus Styrol und Acrylnitril im Verhältnis 75:25 weitere 4 Stunden polymerisiert. Das Reaktionsprodukt wurde dann mittels einer Calciumchloridlösung bei 95°C aus der Dispersion ausgefällt, abgetrennt, mit Wasser gewaschen und im warmen Luftstrom getrocknet. Der Pfropfgrad des Pfropfmischpolymerisats wurde zu 35 % ermittelt; die mittlere Teilchengröße der Latexteilchen betrug 510 nm.

(c) Herstellung des Pfropfmischpolymerisates $B_3$ (Vergleich)

Durch Polymerisation von 60 Teilen Butadien in Gegenwart einer Lösung von 0,6 Teilen tert.-Dodecylmercaptan, 0,7 Teilen $C_{14}$-Na-Alkylsulfonat als Emulgator, 0,2 Teilen Kaliumperoxodisulfat und 0,2 Teilen Natriumpyrophosphat in 80 Teilen Wasser wird bei 65°C ein Polybutadienlatex hergestellt. Nach Beendigung der Reaktion wird der Polymerisationsautoklav entspannt. Der Umsatz betrug 98 %.

Es wird ein Polybutadien erhalten, dessen mittlere Teilchengröße bei 0,1 µm liegt. Der erhaltene Latex wurde durch Zusatz von 25 Teilen einer Emulsion, eines Copolymeren aus 96 Teilen Ethylacrylat und 4 Teilen Methacrylsäureamid mit einem Feststoffgehalt von 10 Gewichtsteilen agglomeriert, wobe ein Polybutadienlatex mit einer mittleren Teilchengröße von 0,35 µm entstand. Nach Zusetzen von 40 Teilen Wasser, 0,4 Teilen Na-$C_{14}$-Alkylsulfonat und 0,2

Teilen Kaliumperoxodisulfat wurden 40 Teile einer Mischung aus Styrol und Acrylnitril im Verhältnis von 70:30 innerhalb von 4 Stunden zugeführt. Die Polymerisation erfolgte unter Rühren des Ansatzes bei 75°C. Der Umsatz, bezogen auf Styrol-Acrylnitril war praktisch quantitativ. Die erhaltene Pfropfkautschukdispersion wurde mittels Calciumchloridlösung gefällt und das abgetrennte Pfropfmischpolymerisat mit destilliertem Wasser gewaschen.

Komponente C

Durch kontinuierliche Lösungspolymerisation nach einem Verfahren wie es beispielsweise im Kunststoff-Handbuch, Vieweg-Daumiller, Band V (Polystyrol), Carl-Hanser-Verlag, München 1969, Seite 124, Zeilen 12ff, beschrieben ist wurden folgende Copolymerisate hergestellt:

| | | | |
|---|---|---|---|
| $C_1$: | Styrol/Acrylnitril | 80/20 | VZ = 83 ml/g |
| $C_2$: | α-Methylstyrol/Acrylnitril | 70/30 | VZ = 58 ml/g |
| $C_3$: | Styrol/Maleinsäureanhydrid | 76:24 | VZ = 65 ml/g. |

Komponente D

Triphenylphosphat: $D_1$
Tri(2,6-dimethylphenyl-)phosphat: $D_2$

Komponente E

Ausgehend von einer Teflon-Dispersion mit einem Feststoffgehalt von 10 Gew.%, Dichte des gesinterten Feststoffs von 2,23 g/cm$^3$, und einer Teilchengröße von 0,23 µm (Fa. Dupont, Typ 30N) werden 2 unterschiedliche Batche des Tetrafluorethylenpolymerisats mit Copolymerisaten hergestellt.

$E_1$: Koagulierte Mischung aus Tetrafluorethylenpolymerisat und Pfropfkautschuk $B_2$, Gewichtsverhältnis 1,2:98,8
Herstellung von $E_1$): Die Emulsion des Tetrafluorethylenpolymerisats wurde mit der Emulsion des SAN-Pfropfpolymerisates $B_2$ vermischt und mit 0,4 Gew.%, bezogen auf Polymerfeststoff, phenolischer Antioxidantien stabilisiert. Bei 85 bis 95°C wird die Mischung mit einer wäßrigen Lösung von $MgSO_4$ (Bittersalz) koaguliert, filtriert und bis zur praktischen Elektrolytfreiheit gewaschen, anschließend durch Zentrifugation von der Hauptmenge Wasser befreit und danach bei 100°C zu einem Pulver getrocknet. Dieses Pulver kann dann mit den weiteren Komponenten in den beschriebenen Aggregaten compoundiert werden.

$E_2$:Tetrafluorethylenpolymerisat-Batch in Styrol-acrylnitril-Copolymerisat
In einem Zweiwellenextruder der Fa. Werner & Pfleiderer wurde das Styrol/Acrylnitril-Copolymere $C_1$ aufgeschmolzen und die Teflon-Dispersion in die Schmelze eingepumpt. Entlang des Extruders wird das Wasser abgezogen. Die Schmelze wird als Strand ausgepreßt, durch ein Wasserbad gezogen und granuliert. Das Granulat enthält 2 Gew.% Teflon.

Die Erfindung wird durch die nachstehend beschriebenen Beispiele und Vergleichsversuche näher erläutert. Die in den Beispielen genannten Teile beziehen sich auf das Gewicht.

Beispiele 1 bis 5 und Vergleichsversuche I bis III

Die in Tabelle 1 angegebenen Gewichtsteile der Komponente A bis E werden in trockenen Form auf einen Fluidmischer gemischt und bei 260°C auf einen Doppelschneckenextruder (ZSK 30 der Fa. Werner & Pfleiderer) extrudiert. Aus dem getrockneten Granulat der Proben werden die Formkörper für die Eigenschaftsprüfungen [Normkleinstäbe mit gesägter Kerbe, Brandstäbe mit 1/16" Dicke, 2 mm Rundscheiben (Ø60 mm)] durch Spritzgießen bei 250°C hergestellt.

In Tabelle 2 sind die Eigenschaften der Mischungen zusammengestellt.

Tabelle 1

| | A | B | | C | | D | | E | | Gehalt an PTFE |
|---|---|---|---|---|---|---|---|---|---|---|
| Beispiel | Menge | Art | Menge | Art | Menge | Art | Menge | Art | Menge | Copolymer in Gew.% |
| 1 | 65 | $B_2$ | 8 | $C_1$ | 14,2* | $D_1$ | 12,5 | $E_2$ | 14,5 | 0,3 |
| 2 | 65 | $B_2$ | 8 | $C_1$ | 4,5+9,8* | $D_1$ | 12,5 | $E_2$ | 10,0 | 0,2 |
| 3 | 65 | $B_1+B_2$ | 3+7 | $C_2+C_1$ | 6 +4,9* | $D_1$ | 14 | $E_2$ | 5,0 | 0,1 |
| 4 | 65 | $B_2$ | 8** | $C_1$ | 14,5 | $D_1$ | 12,5 | $E_1$ | 8,1 | 0,1 |
| 5 | 65 | $B_2$ | 8 | $C_3$ | 9,5+4,9* | $D_1$ | 12,5 | $E_2$ | 5,0 | 0,1 |
| 6 | 65 | $B_2$ | 7 | $C_2+C_1$ | 8,5+4,9* | $D_2$ | 1,5 | $E_2$ | 5,0 | 0,1 |

Vergleichsversuche

| | A | B | | C | | | | | | |
|---|---|---|---|---|---|---|---|---|---|---|
| Beispiel | Menge | Art | Menge | Art | Menge | | | | | |
| I | 65 | $B_3$ | 5 | $C_2+C_1$ | 14+4,9* | | 11 | | 5 | 0,1 |
| II | 65 | $B_3$ | 10 | $C_2+C_1$ | 6+4,9* | | 14 | | 5 | 0,1 |
| III | 65 | $B_3$ | 8 | $C_3+C_1$ | 10+4,9* | | 12 | | 5 | 0,1 |
| IV | 55 | $B_2$ | 15,5 | $C_2$ | 16 | | 9*** | | 4,5 | 0 |

* über Batch $E_2$ eingebracht

** über Batch $E_1$ eingebracht

*** gemäß Lehre der EP-A-✗ 201 763

1) Poly-pentabrombenzylacrylat + 4,5 $Sb_2O_3$, letzteres eingebracht als 90 %iger Batch in Polyethylen

Tabelle 2

| Beispiel | $a_K$ RT kJ/$m^2$ | Wg (RT) Nm | UL-94-Klassifizierung 1/16"-Stab | Vergilbung 1) |
|---|---|---|---|---|
| 1 | 17,3 | 64,1 | V0 | + |
| 2 | 19,5 | 69,6 | V0 | + |
| 3 | 34,0 | 66,4 | V0 | + |
| 4 | 26,3 | 78,2 | V0 | + |
| 5 | 24,3 | 67,1 | V0 | + |
| 6 | 50,4 | 70,9 | V0 | + |
| Vergleichsversuch | | | | |
| I | 4,3 | 69,0 | V2 | - |
| II | 30,8 | 56,4 | V2 | - |
| III | 25,2 | 60,9 | V1 | - |
| IV | 30,7 | 22,4 | V0 | + |

1) + kein Farbunterschied zwischen belichteten und unbelichteten Rundscheiben
- deutlicher Farbunterschied (Gelbstich) zwischen belichteten und unbelichteten Rundscheiben.

## Patentansprüche

**1.** Flammfeste, halogenfreie thermoplastische Formmasse, enthaltend, bezogen auf die Formmasse aus A, B, C, D und E,

A) 40 bis 95 Gew.% eines thermoplastischen halogenfreien aromatischen Polycarbonats, auf Basis der Diphenole der Formel (I)

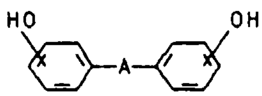

(I)

worin A eine Einfachbindung, eine $C_1$-$C_3$-Alkylen, $C_2$-$C_3$-Alkyliden, ein $C_3$-$C_6$-Cycloalkyliden, -S- oder -$SO_2$- sind,

B) 5 bis 30 Gew.% mindestens eines halogenfreien Pfropfpolymerisats aufgebaut aus, bezogen auf B),

$b_1$) einem Elastomeren (Kautschuk), das 40 bis 80 Gew.% ausmacht, und

$b_2$) einer Pfropfhülle auf dieses Elastomere, die 20 bis 60 Gew.% ausmacht und aufgebaut ist aus, bezogen auf $b_2$),

$b_2a_1$) 50 bis 95 Gew.% Styrol, α-Methylstyrol, kernsubstituiertem Styrol, Methylmethacrylat oder Mischungen daraus und

$b_2a_2$) 50 bis 5 Gew.% (Meth)acrylnitril, Methylmethacrylat, Maleinsäureanhydrid, N-substituiertem Maleinimid oder Mischungen daraus,

C) 5 bis 50 Gew.% mindestens eines halogenfreien thermoplastischen Copolymerisats aus, bezogen auf C,
50 bis 95 Gew.% Styrol, α-Methylstyrol, kernsubstituiertem Styrol, Methylmethacrylat oder Mischungen daraus, und
50 bis 5 Gew.% (Meth)acrylnitril, Methylmethacrylat, Maleinsäureanhydrid, N-substituiertem Maleinimid oder Mischungen daraus,

D) 1 bis 25 Gew.% mindestens einer halogenfreien Phosphorverbindung der Formel

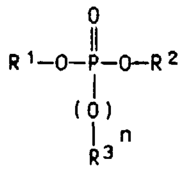

(I)

worin $R^1$, $R^2$ und $R^3$ unabhängig voneinander ein halogenfreies $C_1$-$C_8$-Alkyl oder ein halogenfreies $C_6$-$C_{20}$-Aryl und n = 0 oder 1 sind,
und

E) 0,05 bis 5 Gew.% eines Tetrafluorethylenpolymerisats, dadurch gekennzeichnet, daß das Elastomere $b_1$) hergestellt wird durch Polymerisieren einer Monomermischung aus

$b_1a_1$) 70 bis 99,9 Gew.%, bezogen auf $b_1$), mindestens eines Alkylacrylats mit 1 bis 8 Kohlenstoffatomen im Alkylrest

$b_1a_2$) 0 bis 30 Gew.%, bezogen auf $b_1$), mindestens eines weiteren copolymerisierbaren monoethylenisch ungesättigten Monomeren
und

$b_1a_3$) 0,1 bis 5 Gew.%, bezogen auf $b_1$), eines copolymerisierbaren polyfunktionellen, vernetzenden Homomeren.

**2.** Formmasse nach Anspruch 1, gekennzeichnet durch folgende Gehalte an den Komponenten:

Komponente A: 45 bis 85 Gew.%,
Komponente B: 5 bis 25 Gew.,
Komponente C: 5 bis 40 Gew.,
Komponente D: 3 bis 20 Gew.% und
Komponente F: 0,05 bis 2,5 Gew.%.

**3.** Formmasse nach Anspruch 1, gekennzeichnet durch folgende Gehalte an den Komponenten:

Komponente A: 50 bis 80 Gew.%,
Komponente B: 5 bis 20 Gew.,
Komponente C: 5 bis 30 Gew.,
Komponente D: 5 bis 18 Gew.% und
Komponente E: 0,05 bis 1 Gew.%.

**4.** Formmase nach Ansprüchen 1, 2 oder 3, bestehend aus den Komponenten A bis E.

**5.** Formmasse nach Ansprüchen 1, 2 oder 3, enthaltend ferner übliche Zusatzstoffe (Komponente F).

**6.** Formmasse nach Anspruch 1, dadurch gekennzeichnet, daß die Komponente B) besteht aus einem ersten, grobteiligen Pfropfmischpolymerisat, das eine mittlere Teilchengröße von 200 bis 700 nm ($d_{50}$-Wert der integralen Hasseverteilung) aufweist, in einem Anteil von 30 bis 70 Gew.%, bezogen auf B),
und
einem zweiten, feinteiligen Pfropfmischpolymerisat, das eine mittlere Teilchengröße von 50 bis 180 nm (dso-Wert der integralen Hasseverteilung) aufweist, in einem Anteil von 70 bis 30 Gew.%, bezogen auf B).

**7.** Formmasse nach Anspruch 1, dadurch gekennzeichnet, daß die Formmasse 5 bis 80 Gew.-Teile (bezogen auf 100 Gew.-Teile der Summe der Komponenten A bis E) Glasfasern, Kohlenstoff-Fasern, Verstärkungs- und Füllstoffe, sowie Metallflocken, Metallpulver, Metallfasern oder metallbeschichtete Glasfasern oder Mischungen davon enthält (Komponente F).

**8.** Verfahren zur Herstellung einer Formmasse gemäß Anspruch 1 durch Mischen der Komponenten in an sich bekannter Weise, wobei Emulsionen der Komponenten B und E gemeinsam gefällt werden und diese entwässerte und getrocknete Mischung den Komponenten A, C und D zugegeben werden.

9. Verfahren zur Herstellung einer Formmasse gemäß Anspruch 1 durch Mischen der Komponenten, wobei die Emulsion der Komponente E zunächst unter Entgasung, vorzugsweise in einem Extruder, in eine Schmelze der Komponente C eingeführt wird und die erhaltene Mischung den weiteren Komponenten zur Abmischung mit diesen zugeführt wird.

**Claims**

1. A flameproof, halogen-free thermoplastic molding material containing, based on the sum of A, B, C, D and E,

A) from 40 to 95% by weight of a thermoplastic halogen-free aromatic polycarbonate based on a diphenol of the formula (I)

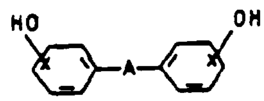

(I)

where A is a single bond, $C_1$-$C_3$-alkylene, $C_2$-$C_3$-alkylidene, $C_3$-$C_6$-cycloalkylidine, -S- or $-SO_2-$,
B) from 5 to 30% by weight of one or more halogen-free graft polymers obtained from, based on B),

$b_1$) an elastomer (rubber) which accounts for from 40 to 80% by weight, and
$b_2$) a graft shell on this elastomer which accounts for from 20 to 60% by weight and is obtained from, based on $b_2$),

$b_2a_1$) from 50 to 95% by weight of styrene, α-methylstyrene, styrene which is substituted in the nucleus, methyl methacrylate or a mixture of these, and
$b_2a_2$) from 50 to 5% by weight of (meth)acrylonitrile, methyl methacrylate, maleic anhydride, N-substituted maleimide or a mixture of these,

C) from 5 to 50% by weight of one or more halogen-free thermoplastic copolymers consisting of, based on C, from 50 to 95% by weight of styrene, α-methylstyrene, styrene which is substituted in the nucleus, methyl methacrylate or a mixture of these, and from 50 to 5% by weight of (meth)acrylonitrile, methyl methacrylate, maleic anhydride, N-substituted maleimide or a mixture of these,
D) from 1 to 25% by weight of one or more halogen-free phosphorus compounds of the formula

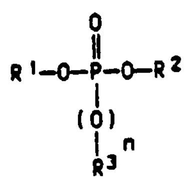

(I)

where $R^1$, $R^2$ and $R^3$ independently of one another are each halogen-free $C_1$-$C_8$-alkyl or halogen-free $C_6$-$C_{20}$-aryl and n is 0 or 1,
E) from 0.05 to 5% by weight of a tetrafluoroethylene polymer, wherein the elastomer $b_1$) is prepared by polymerizing a monomer mixture of

$b_1a_1$) from 70 to 99.9% by weight, based on $b_1$), of one or more alkyl acrylates where alkyl is of 1 to 8 carbon atoms,
$b_1a_2$) from 0 to 30% by weight, based on $b_1$), of one or more further copolymerizable monoethylenically unsaturated monomers
and
$b_1a_3$) from 0.1 to 5% by weight, based on $b_1$), of a copolymerizable polyfunctional, crosslinking monomer.

and

2. A molding material as claimed in claim 1, which contains the components in the following amounts:

from 45 to 85% by weight of component A,
from 5 to 25% by weight of component B,

from 5 to 40% by weight of component C,
from 3 to 20% by weight of component D, and
from 0.05 to 2.5% by weight of component F.

**3.** A molding material as claimed in claim 1, which contains the components in the following amounts:

from 50 to 80% by weight of component A,
from 5 to 20% by weight of component B,
from 5 to 30% by weight of component C,
from 5 to 18% by weight of component D, and
from 0.05 to 1% by weight of component E.

**4.** A molding material as claimed in claim 1, 2 or 3, consisting of the components A to E.

**5.** A molding material as claimed in claim 1, 2 or 3, which additionally contains conventional additives (component F).

**6.** A molding material as claimed in claim 1, wherein component B) consists of a first, coarse-particled graft copolymer which has a median particle size of from 200 to 700 nm ($d_{50}$ value of the integral mass distribution), in an amount of from 30 to 70% by weight, based on B), and a second, finely divided graft copolymer which has a median particle size of from 50 to 180 nm ($d_{50}$ value of the integral mass distribution), in an amount of from 70 to 30% by weight, based on B).

**7.** A molding material as claimed in claim 1, which contains from 5 to 80 parts by weight (based on 100 parts by weight of the sum of the components A to E) of glass fibers, carbon fibers, reinforcing materials and fillers and metal flakes, metal powder, metal fibers or metal-coated glass fibers or a mixture thereof (component F).

**8.** A process for the preparation of a molding material as claimed in claim 1 by mixing the components in a conventional manner, in which emulsions of components B and E are coprecipitated and this dewatered and dried mixture is added to components A, C and D.

**9.** A process for the preparation of a molding material as claimed in claim 1 by mixing the components, in which the emulsion of component E is first introduced into a melt of component C with devolatilization, preferably in an extruder, and the resulting mixture is added to the further components for mixing therewith.

**Revendications**

**1.** Matière à mouler thermoplastique exempte d'halogènes et résistant au feu, contenant, par rapport à la matière à mouler constituée de A, B, C, D et E,

A) 40 à 95 % en poids d'un polycarbonate aromatique, thermoplastique et exempt d'halogènes, à base des diphénols répondant à la formule (I)

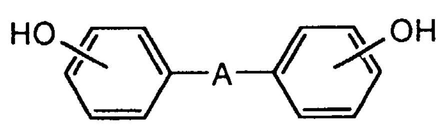

(I)

dans laquelle A représente une simple liaison, un groupe alkylène en $C_1$-$C_3$, un groupe alkylidène en $C_2$-$C_3$, un groupe cycloalkylidène en $C_3$-$C_6$, -S- ou -$SO_2$-.
B) 5 à 30 % en poids d'au moins un polymère greffé exempt d'halogènes, formé de, par rapport à B),

$b_1$) un élastomère (caoutchouc) qui représente 40 à 80 % en poids, et
b2) une enveloppe de greffage sur cet élastomère, qui représente 20 à 60 % en poids et qui est formée de, par rapport à $b_2$),

$b_2a_1$) 50 à 95 % en poids de styrène, d'α-méthylstyrène, de styrène substitué sur le noyau, de méthacrylate de méthyle ou de mélanges de ceux-ci et
$b_2a_2$) 50 à 5 % en poids de (méth)acrylonitrile, de méthacrylate de méthyle, d'anhydride maléique,

de maléinimide N-substituée ou de mélanges de ceux-ci,

C) 5 à 50 % en poids d'au moins un copolymère thermoplastique exempt d'halogènes, constitué de, par rapport à C,
50 à 95 % en poids de styrène, d'α-méthylstyrène, de styrène substitué sur le noyau, de méthacrylate de méthyle ou de mélanges de ceux-ci, et
50 à 5 % en poids de (méth)acrylonitrile, de méthacrylate de méthyle, d'anhydride maléique, de maléinimide N-substituée ou de mélanges de ceux-ci,
D) 1 à 25 % en poids d'au moins un composé du phosphore exempt d'halogènes, répondant à la formule

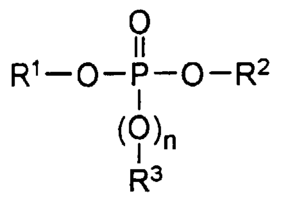

(I)

dans laquelle $R^1$, $R^2$ et $R^3$ représentent indépendamment les uns des autres un groupe alkyle en $C_1$-$C_8$ exempt d'halogènes ou un groupe aryle en $C_6$-$C_{20}$ exempt d'halogènes et n = 0 ou 1,
et
E) 0,05 à 5 % en poids d'un polymère de tétrafluoroéthylène, caractérisée en ce que l'élastomère $b_1$) est préparé par polymérisation d'un mélange de monomères constitué de

$b_1a_1$) 70 à 99,9 % en poids, par rapport à $b_1$), d'au moins un acrylate d'alkyle avec 1 à 8 atomes de carbone dans le résidu alkyle
$b_1a_2$) 0 à 30 % en poids, par rapport à $b_1$), d'au moins un monomère monoéthyléniquement insaturé, copolymérisable supplémentaire et
$b_1a_3$) 0,1 à 5% en poids, par rapport à $b_1$), d'un monomère polyfonctionnel, copolymérisable, à action réticulante.

**2.** Matière à mouler selon la revendication 1, caractérisée par les teneurs suivantes en composants :

composant A : 45 à 85 % en poids,
composant B : 5 à 25 % en poids,
composant C : 5 à 40 % en poids,
composant D: 3 à 20 % en poids et
composant F: 0,05 à 2,5 % en poids.

**3.** Matière à mouler selon la revendication 1, caractérisée par les teneurs suivantes en composants :

composant A : 50 à 80 % en poids,
composant B: 5 à 20 % en poids,
composant C : 5 à 30 % en poids,
composant D : 5 à 18 % en poids et
composant E: 0,05 à 1 % en poids.

**4.** Matière à mouler selon les revendications 1, 2 ou 3, constituée des composants A à E.

**5.** Matière à mouler selon les revendications 1, 2 ou 3, contenant en outre des additifs courants (composant F).

**6.** Matière à mouler selon la revendication 1, caractérisée en ce que le composant B) est constitué d'un premier copolymère greffé à particules grossières, qui présente une granulométrie moyenne de 200 à 700 nm (valeur $d_{50}$ de la distribution massique intégrale), avec une teneur de 30 à 70 % en poids, par rapport à B),
et
d'un deuxième copolymère greffé à fines particules, qui présente une granulométrie moyenne de 50 à 180 nm (valeur $d_{50}$ de la distribution massique intégrale), avec une teneur de 70 à 30 % en poids, par rapport à B).

**7.** Matière à mouler selon la revendication 1, caractérisée en ce que la matière à mouler contient 5 à 80 parts en poids (par rapport à 100 parts en poids de la somme des composants A à E) de fibres de verre, de fibres de

carbone, de matières de renforcement ou de charge, de même que de flocons métalliques, de poudres métalliques, de fibres métalliques, de fibres de verre à revêtement métallique ou de mélanges de ceux-ci (composant F).

**8.** Procédé de préparation d'une matière à mouler selon la revendication 1 par mélange des composants d'une manière connue en soi, au cours duquel des émulsions des composants B et E sont précipitées ensemble et ce mélange déshydraté et séché est ajouté aux composants A, C et D.

**9.** Procédé de préparation d'une matière à mouler selon la revendication 1 par mélange des composants, au cours duquel l'émulsion du composant E est introduite d'abord dans une masse en fusion du composant C en dégazant, de préférence dans une extrudeuse, et le mélange résultant est acheminé vers les autres composants en vue de leur mélange.